# EUROPEAN PATENT APPLICATION

(11) **EP 2 693 350 A1**
(43) Date of publication of application: **05.02.2014**
(21) Application number: 13178118.9
(22) Date of filing: 26.07.2013
(51) Int. Cl.: G06F 17/30

(54) **Electronic device for searching map through map browsing history and method thereof**

(30) Priority: 01.08.2012 KR 20120084565
(71) Applicant: Samsung Electronics Co., Ltd, Gyeonggi-do 443-742 (KR)
(72) Inventor: Kim, Jeong-Ja, Gyeonggi-do (KR)
(74) Representative: Nederlandsch Octrooibureau

(57) **Abstract**

An operation method of an electronic device is provided. The method includes calling a stored map browsing history, receiving a selection of one of one or more maps stored in the map browsing history, and displaying the selected map.

## Description

### BACKGROUND OF THE INVENTION

### 1. Field of the Invention:

The present invention relates to a method and electronic device. More particularly, the present invention relates to a method of searching through map browsing history and an electronic device thereof.

### 2. Description of the Related Art:

With the development of a certain function of an electronic device, a user could easily search domestic and foreign areas of interest by using an electronic map provided in the electronic device. In more detail, if the user executes a map browsing application of the electronic device, the electronic device interworks with a Global Positioning System (GPS) satellite to provide various information about a current location of the user and areas of interest in proximity thereof. For example, if the user inputs the areas of interest and the like to the electronic device, the electronic device provides paths from the current location of the user to the areas of interest, peripheral information of the path, and the like.

However, the electronic device of the related art has a disadvantage in that it does not provide a function of automatically storing the areas of interest that the user had browsed before. That is, the electronic device of the related art has a problem in that, when there are areas of interest that the user wants to save when browsing the electronic map, the user must manually save the areas of interest. For example, when the user browsed unfamiliar areas by the electronic map, it was difficult to return to a previously searched area after searching peripheral areas, because the user had not specified and searched the areas of particular interest.

More particularly, when a user searches an electronic map abroad, there is a problem in that much interaction is involved for the user who is unfamiliar with a local language of a foreign country to return to a previously browsed area, because all information of the electronic map is displayed in the local language of the foreign country.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages below. Accordingly, an aspect of the present invention is to provide an apparatus and method for automatically storing an area that a user had browsed previously, thereby allowing the user to easily return to browsing the area.

Another aspect of the present invention is to provide an apparatus and method for, when a user is in a foreign country, allowing the user, by minimum interaction, to return to browsing an area that the user had browsed previously, without regard to whether the user is familiar with a local language of the browsed area.

A further aspect of the present invention is to provide an apparatus and method for, when a newly browsed area and a previously browsed area overlap with each other, automatically deleting a previously stored map to achieve efficient management of a memory of an electronic device.

The above aspects are addressed by providing an electronic device for searching a map through a map browsing history and a method thereof.

In accordance with an aspect of the present invention, an operation method for searching a map by using a map browsing history is provided. The method calling a stored map browsing history, receiving a selection of one of one or more maps stored in the map browsing history, and displaying the selected map.

In accordance with another aspect of the present invention, an electronic device for searching a map by using a map browsing history is provided. The device includes a touch screen for displaying an output, receiving an input to call a stored map browsing history and an input to select a stored map, and a processor unit for controlling to call the stored map browsing history in response to the input, to receive the input selecting one of one or more maps stored in the map browsing history, and to display the selected map on the touch screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description when taken in conjunction with the accompanying drawings in which:

FIG. 1 is a diagram illustrating an exemplary embodiment for describing a map browsing history according to an exemplary embodiment of the present invention;

FIGS. 2A and 2B are diagrams illustrating exemplary embodiments of before and after map tile images have been completely downloaded according to an exemplary embodiment of the present invention;

FIGS. 3A to 3D are diagrams illustrating an exemplary embodiment of automatically storing a specific area according to a movement of a map center according to an exemplary embodiment of the present invention;

FIGS. 4A to 4D are diagrams illustrating a method of automatically storing a specific area according to a movement of a map center according to an exemplary embodiment of the present invention;

FIGS. 5A to 5D are diagrams illustrating a method of storing a dragged map image according to an exemplary embodiment of the present invention;

FIGS. 6A to 6D are diagrams illustrating a method of calling a map browsing history and displaying a map image of a specific area according to an exemplary embodiment of the present invention;

FIGS. 7A to 7D are diagrams illustrating a method of calling a map browsing history and displaying a map image of a specific area according to an exemplary embodiment of the present invention;

FIG. 8 is a flowchart illustrating a procedure of calling a map image and newly storing and deleting a map browsing history according to an exemplary embodiment of the present invention; and

FIG. 9 is a block diagram illustrating a construction of an electronic device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In exemplary embodiments of the present invention, a map browsing history can be defined as a list of electronic maps that a user had browsed previously which are stored as thumbnails for map images and related information (e.g., an address, a map, and a center coordinate). In more detail, if the user executes an electronic map application to browse the electronic map, the electronic device stores an electronic map of a map image currently displayed on the electronic device, when a predetermined condition is met. That is, the map browsing history of exemplary embodiments of the present invention refers to a list of electronic maps that the user had browsed previously which are stored as map images. By using the stored map browsing history, the user can directly return to an electronic map of a specific place that the user had browsed previously.

In the related art, there is a disadvantage that, if there is a specific place that a user wants to store when using an electronic map application and browsing an electronic map, the user must manually store the electronic map including the specific place. In more detail, in the related art, much interaction was involved for the user to return the electronic map to a first browsed place or a previously browsed place when the user is browsing an unfamiliar place by the electronic map. For example, assume that, when the user is browsing an unfamiliar place 'A' by the electronic map, the user browses a few other places 'B', 'C', and 'D' located near the unfamiliar place 'A' through interaction such as zoom, and then desires to return a center position of the electronic map to one of the previously browsed places 'A', 'B', 'C', or 'D'. In the aforementioned example, there is a problem that, even when the user searches the other places 'B', 'C', and 'D' around the unfamiliar place 'A' and then intends to again return the center position of the electronic map to the previously browsed place 'B', 'C', or 'D', much interaction is involved for the user to return the center position of the electronic map to the previously browsed place 'B', 'C', or 'D', because the user is unfamiliar with the places 'A', 'B', 'C', and 'D'. That is, being unfamiliar with the location makes it difficult for the user to precisely understand, remember, and input the previously browsed electronic map locations. This may be particularly difficult if the electronic map is marked in a language foreign to the user.

But, unlike the related art, an electronic device according to an exemplary embodiment of the present invention automatically stores a map image currently displayed on the electronic device and its related information, when a predetermined condition is met. Accordingly, the electronic device according to an exemplary embodiment of the present invention provides an advantage that, even when a user intends to return to a previously browsed place after browsing, though not particularly searching, a specific area by an electronic map, the user can directly return to a desired place, without requiring excessive interaction, by using information stored in a map browsing history.

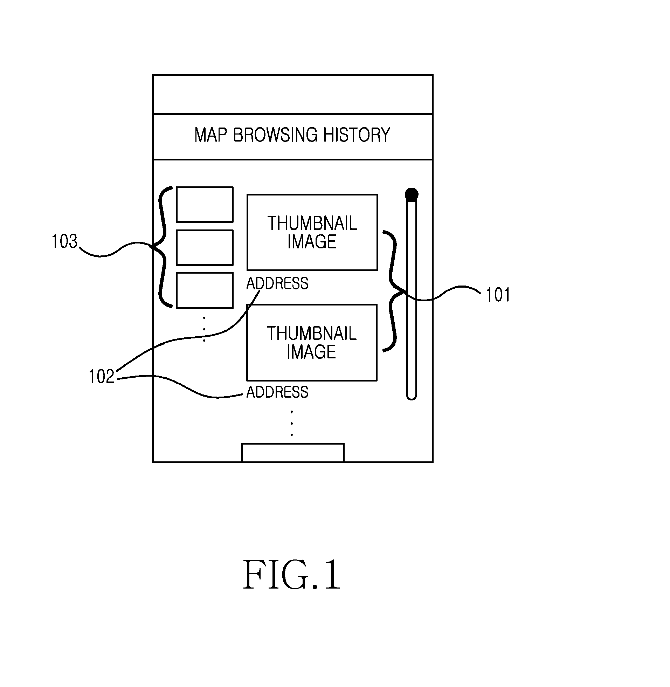

FIG. 1 is a diagram illustrating a map browsing history according to an exemplary embodiment of the present invention.

Referring to FIG. 1, one or more thumbnail images 101 stored by country, addresses 102 of the corresponding thumbnail images 101, and at least one or more country icons 103 sorting and storing the one or more thumbnail images 101 by country, are displayed in the map browsing history. First, the thumbnail images 101 can be defined as images reducing map images stored in an electronic device to a smaller size and displaying the size-reduced map images. In detail, a thumbnail image 101 is automatically created when map tile images are displayed on the electronic device. A user can select one of the thumbnail images 101 which indicates a place to which the user desires to return, upon seeing the one or more thumbnail images 101 displayed in the map browsing history.

The addresses 102 of the thumbnail images 101 can be literally defined as center addresses of the corresponding thumbnail images 101. For example, the addresses 102 of the thumbnail images 101 may indicate addresses of the center coordinates, such as latitudes and longitudes, of the corresponding thumbnail images 101. That is, the user can easily locate and return to a desired place upon seeing the thumbnail images 101 and/or the addresses 102 of the thumbnail images 101 that are displayed on the electronic device.

The country icons 103 can be defined as icons sorting and storing, by country, one or more maps stored in the electronic device. In more detail, at a time a user stores a thumbnail image in the map browsing history, the electronic device comprehends a country corresponding to the thumbnail image that the user intends to store, and sorts and stores the map browsing history by country. That is, the country icons 103 store, by corresponding country, map images that the user had browsed previously. Accordingly, the exemplary embodiment of the present invention provides an advantage that the user can select a country icon 103 of a country corresponding to a map image that the user desires to call, to locate and select the map image quickly and easily.

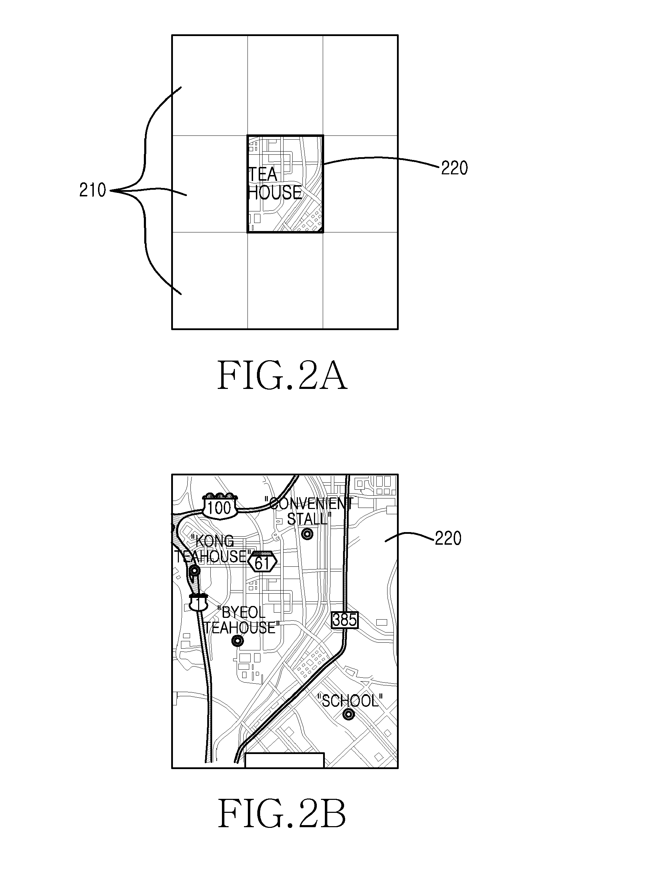

FIGS. 2A and 2B are diagrams illustrating before and after map tile images have been completely downloaded according to an exemplary embodiment of the present invention.

FIG. 2A is a diagram illustrating before map tile images 220 have been completely downloaded according to an exemplary embodiment of the present invention. First, if a user executes an electronic map application in an electronic device, the electronic device sends a server a request for download of map tile images 220 of an area of the user's interest in order to display the area on the electronic device. In more detail, the electronic device sends the server a request for download of the map tile images 220 of the area of interest according to a user input and displays the map tile images 220 on the electronic device.

As illustrated in FIG. 2A, if map tile images 220 of a specific area for which the electronic device has sent the server a request are not completely downloaded, the electronic device displays an electronic map with blanks 210 where the tile images 220 have not completely downloaded. In more detail, with the incompletely downloaded electronic map with the blanks 210 in terms of a user, the user is in a standby state in which he/she cannot browse the electronic map of the specific area, and in terms of the electronic device, it means that the electronic device is similarly in a standby state until the map tile images 220 are completely downloaded from the server.

FIG. 2B is a diagram illustrating after map tile images 220 have been completely downloaded according to exemplary embodiment of the present invention. If map tile images 220 of a specific area for which the electronic device has sent the server a request have been completely downloaded, the electronic device displays the completely downloaded map tile images 220 as in the exemplary embodiment illustrated in FIG. 2B. In more detail, in terms of a user, the user is in an active state in which he/she can browse the electronic map of the specific area, and in terms of the electronic device, the electronic device is in an active state in which it automatically stores the map tile images 220 of the specific area in a map browsing history. Here, the map browsing history can include data such as a thumbnail image of a map image displayed on the electronic device, a center coordinate of the map image, a zoom level of the map image, an address of the center coordinate of the map image, a display mode of the map image, and the like.

After that, even after the map image of the specific area is completely downloaded, if a user moves the center of the completely downloaded map image, the electronic device again sends the server a request for download of map tile images 220 of a moved area in order to display a map image of the moved area. If the map tile images of the moved area have been previously stored in the electronic device, the stored data can be utilized.

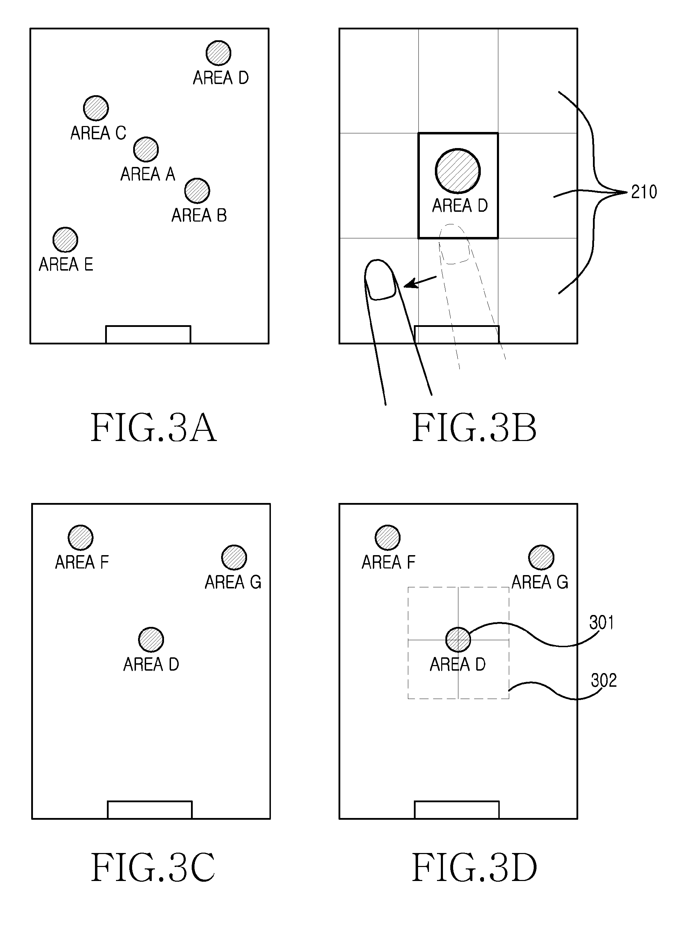

FIGS. 3A to 3D are diagrams illustrating automatically storing a specific area according to a movement of a map center according to an exemplary embodiment of the present invention.

FIG. 3A is a diagram illustrating displaying specific areas that have been completely downloaded on an electronic device according to an exemplary embodiment of the present invention. FIG. 3A illustrates a case where the downloading and automatic storing of specific areas are all completed. In more detail, five areas (i.e., an area 'A', an area 'B', an area 'C', an area 'D', and an area 'E') of a range of user's interest have been all displayed on the electronic device. From the fact that the aforementioned five areas have all been displayed clearly without blanks on the electronic device, it can be determined that map tile images 220 of a range of interest have been completely downloaded from a server. After the map tile images 220 have been completely downloaded, the electronic device has completed automatically storing map images of the corresponding areas. The automatic storing of the map image is described below in more detail below with reference to FIG. 3D.

FIG. 3B is a diagram illustrating a map image incompletely downloaded after a map image is dragged according to exemplary embodiment of the present invention. In the aforementioned example, after specific areas are completely downloaded, if the electronic device receives an input of browsing an electronic map to another area from a user, the electronic device sends a server a request for download of map tile images 220 of the newly dragged area so as to display a map image of the newly dragged area. In FIG. 3B, if the user drags the map image, which is displayed as in FIG. 3A, in a left diagonal down direction (Southwest) with a finger or an input tool such as a stylus, the map image displayed is dragged into a right diagonal up (Northeast) part of the screen. That is, the electronic device sends the server a request for download of map tile images 220 of a newly dragged area in order to display a map image including an area 'F' and an area 'G' that are located in the both diagonal up directions of the area 'D'.

Referring to FIG. 3B, because map tile images 220 of a specific area for which the electronic device has sent the server a request have not been completely downloaded, the electronic device displays an electronic map with blanks 210. In more detail, in terms of the user, the user is in a standby state in which he/she cannot browse the electronic map of the corresponding specific area, and in terms of the electronic device, the electronic device is in a standby state until the map tile images 220 are completely downloaded from the server.

FIG. 3C is a diagram illustrating a map image completely downloaded after a map image is dragged according to an exemplary embodiment of the present invention. If the map image is completely downloaded from the server after the map image is dragged as in the example of FIG. 3B, the electronic device displays a map image of the newly dragged area. That is, as illustrated in FIG. 3C, the electronic device displays a map image of a newly dragged area including an area 'D', an area 'F', and an area 'G' that are completely downloaded from the server.

FIG. 3D is a diagram illustrating automatically storing a map image according to an exemplary embodiment of the present invention. As illustrated in FIG. 3D, if map tile images 220 of a specific area are completely downloaded from the server, the electronic device automatically stores a newly dragged map image (i.e., a completely downloaded map image). In more detail, the electronic device sends the server a request for download of newly dragged map tile images 220 and, if it is determined that the map tile images 220 are completely downloaded, the electronic device determines whether a center coordinate of stored at least one map image is located outside of a predetermined range from a center coordinate of the newly dragged map image. After that, if it is determined that the center coordinate of the stored at least one map image is located outside of the predetermined range from the center coordinate of the newly dragged map image, the electronic device automatically stores the newly dragged map image. The drawing illustrated in FIG. 3D is described below, for example. First, three areas (i.e., an area 'D', an area 'F', and an area 'G') have been displayed in a newly dragged map image. Here, the center of the area 'D' is a center coordinate 301 of a newly dragged map image, and the centers of the remnant two areas (i.e., the area 'F' and the area 'G') are center coordinates of stored map images. That is, the electronic device determines whether the center coordinate of the stored map image is located outside of a range 302 set by a user from the center coordinate 301 of the newly dragged map image. In an exemplary embodiment of FIG. 3D, because the center coordinates (i.e., the centers of the area 'F' and the area 'G') of the stored map images are located outside of the predetermined range 302 from the center coordinate 301 of the newly dragged map image, the electronic device stores the newly dragged map image, and keeps, not deleting, the map images based on the stored center coordinates (i.e., centers of the area 'F' and the area 'G') of other areas.

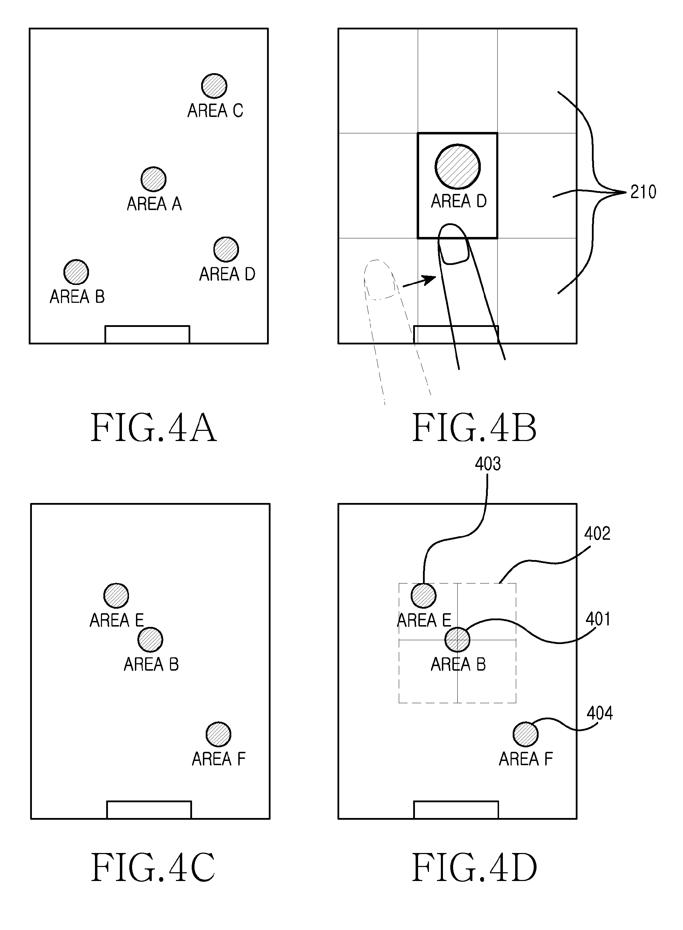

FIGS. 4A to 4D are diagrams illustrating automatically storing a specific area according to a movement of a map center according to an exemplary embodiment of the present invention.

FIG. 4A is a diagram illustrating displaying specific areas completely downloaded according to an exemplary embodiment of the present invention. The drawing illustrated in FIG. 4A is described on the assumption that downloading and automatic storing of specific areas are all completed. In more detail, four areas (i.e., an area 'A', an area 'B', an area 'C', and an area 'D') of a range of user's interest have all been displayed on the electronic device. From the fact that the aforementioned four areas have all been displayed clearly without blanks 210, it can be determined that map tile images 220 of a range of interest have been completely downloaded from a server. After the map tile images 220 have been completely downloaded, the electronic device has completed automatically storing map images of the corresponding areas. The automatic storing of the map images is described below in more detail with reference to FIG. 4D.

FIG. 4B is a diagram illustrating a map image incompletely downloaded after a map image is dragged according to an exemplary embodiment of the present invention. In the aforementioned example, after specific areas are completely downloaded, if the electronic device receives an input of browsing an electronic map to another area from a user, the electronic device sends a server a request for download of map tile images 220 of a newly dragged area so as to display a map image of the newly dragged area. If the user drags the map image, which is displayed on the touch screen as in FIG. 4A, in a right diagonal up direction (Northeast) with a finger or an input tool such as a stylus, the map image displayed on the touch screen is dragged into a left diagonal down (Southwest) part of the screen. That is, the electronic device sends the server a request for download of map tile images 220 of a newly dragged area in order to display a map image including an area 'E' and an area 'F' that are located in the diagonal direction of the area 'B'.

Referring to FIG. 4B, because map tile images of a specific area for which the electronic device has sent the server a request have not been completely downloaded, the electronic device displays an electronic map with blanks 210. In more detail, in terms of the user, the user is in a standby state in which he/she cannot browse the electronic map of the corresponding specific area, and in terms of the electronic device, the electronic device is in a standby state until the map tile images 220 are completely downloaded from the server.

FIG. 4C is a diagram illustrating a map image completely downloaded after a map image is dragged according to an exemplary embodiment of the present invention. If the map image is completely downloaded from the server after the map image is dragged as in the example of FIG. 4B, the electronic device displays a map image of the newly dragged area. That is, as illustrated in FIG. 4C, the electronic device displays a map image of a newly dragged area including an area 'B', an area 'E', and an area 'F' that are completely downloaded from the server.

FIG. 4D is a diagram illustrating automatically storing a map image according to an exemplary embodiment of the present invention. As illustrated in FIG. 4D, if map tile images 220 of a specific area are completely downloaded from the server, the electronic device automatically stores a newly dragged map image (i.e., a completely downloaded map image). In more detail, the electronic device sends the server a request for download of newly dragged map tile images 220 and, if it is determined that the map tile images 220 are completely downloaded, the electronic device determines whether a center coordinate of stored at least one map image is located outside of a predetermined range from a center coordinate of the newly dragged map image. After that, if it is determined that the center coordinate of the stored at least one map image is located outside of the predetermined range from the center coordinate of the newly dragged map image, the electronic device automatically stores the newly dragged map image. First, three areas (i.e., an area 'B', an area 'E', and an area 'F') have been displayed in a newly dragged map image. Here, the center of the area 'B' is a center coordinate 401 of a newly dragged map image, and the centers of the remnant two areas (i.e., the area 'E' and the area 'F') are center coordinates 403 and 404 of stored map images. That is, the electronic device determines whether the center coordinate of the stored map image is located out of a range 402 set by a user from the center coordinate 401 of the newly dragged map image. In the exemplary embodiment of FIG. 4D, because one of the center coordinates 403 of the stored map images is located within the predetermined range 402 from the center coordinate 401 of the newly dragged map image, the electronic device deletes the map image based on the stored center coordinate 403, and stores the newly dragged map image. That is, the electronic device of the present invention has an advantage of, when a center coordinate of a newly browsed map image and a center coordinate of a previously browsed stored map image are duplicated within a predetermined range, deleting the previously browsed stored map image, thereby achieving efficient management of a memory of the electronic device. The electronic device keeps, not deleting, a map image based on a stored center coordinate 404 located outside of the predetermined range 402 from the center coordinate 401 of the newly dragged map image.

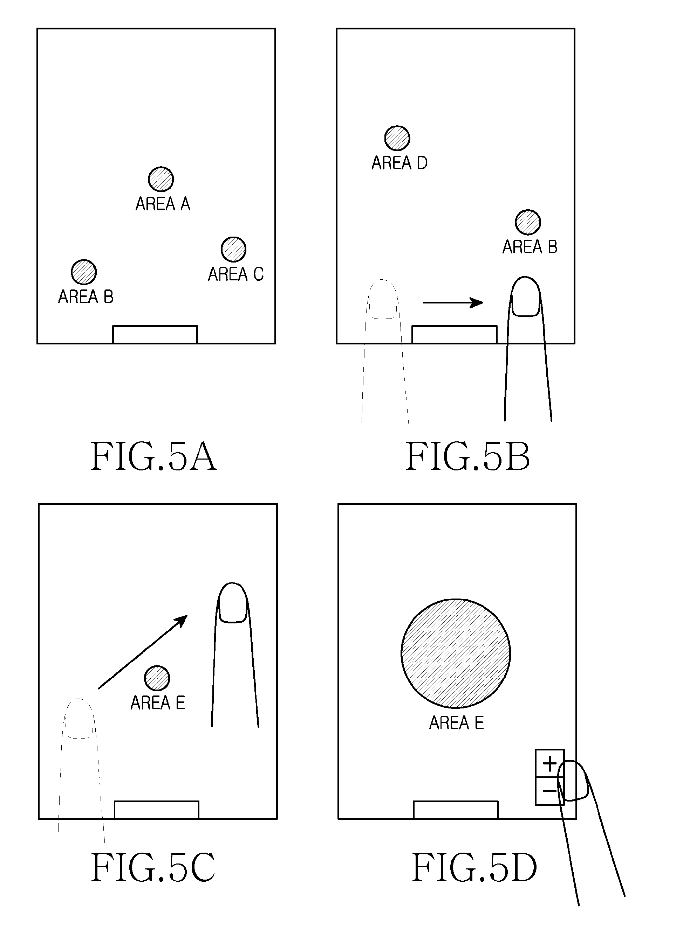

FIGS. 5A to 5D are diagrams illustrating storing a dragged map image according to an exemplary embodiment of the present invention.

FIG. 5A is a diagram illustrating calling a map image including specific areas in an electronic device according to an exemplary embodiment of the present invention. As illustrated in FIG. 5A, if the electronic device according to an exemplary embodiment of the present invention calls a map image including specific areas, the map image including the specific areas is displayed. In more detail, if a user calls a map browsing history to display previously browsed areas and selects a thumbnail image intended to be moved, while seeing thumbnail images including the specific areas and addresses corresponding to the thumbnail images, the map image including the specific areas is displayed on the touch screen of the electronic device. For example, a map image including an area 'A', an area 'B', and an area 'C' can be displayed on the touch screen of the electronic device through the user's selection.

FIG. 5B is a diagram illustrating searching a peripheral area of a displayed map image including specific areas according to an exemplary embodiment of the present invention. In the aforementioned example, after the map image including the area 'A', the area 'B', and the area 'C' is displayed on the electronic device, a user drags his/her finger to the right side of the touch screen in order to drag the displayed map image into the left side of the screen. If so, a map image including the left side of the original area 'B' is displayed on the touch screen of the electronic device. That is, a map image including an area 'D' located at the left side of the area 'B' is displayed on the touch screen of the electronic device.

FIG. 5C is a diagram illustrating searching a peripheral area of a displayed map image including specific areas according to an exemplary embodiment of the present invention. In the aforementioned example, after the map image including the area 'B' and the area 'D' is displayed on the electronic device, the user drags his/her finger to the right and up side of the touch screen so as to drag the displayed map image into the left and down side of the screen. If so, a map image including the left and down side of the original area 'B' and area 'D' is displayed on the touch screen of the electronic device. That is, a map image including an area 'E' located at the left and down side of the area 'B' and area 'D' is displayed.

FIG. 5D is a diagram illustrating zooming in a map image of a specific area according to an exemplary embodiment of the present invention. In the aforementioned example, after the map image including the area 'E' is displayed on the touch screen of the electronic device, if the user zooms in the area 'E', a zoomed-in image of the area 'E' is displayed as illustrated in FIG. 5D. That is, as described through FIG. 5, if the user drags and zooms in a called map image, a date browsing each map image, a center coordinate, a zoom level, a center address, a display mode and the like are stored together, when the corresponding map image is stored.

Table 1 below shows an exemplary embodiment of status information of the time when a map browsing database is stored.

**Table 1**

| Status information | Status |
|---|---|
| Browsing date | 2012-5-5 |
| Center coordinate | (37.256566, 127.054095) |
| Zoom level | 15.0 |
| Center address | Maetan 3-dong, Suwon city |
| Display mode | Hybrid |

The status information about a stored map image as illustrated in Table 1 is described, for example. If a map image is newly dragged and zoomed-in in FIG. 5, the map image including status information can be stored. For example, if a user calls a previously browsed map image through a map browsing history of the electronic device, the electronic device can display the previously browsed map image including status information of a time when the previously browsed map image was stored. That is, the electronic device can display the map image including the status information, in which a date of the time when the map image was stored is "May 5, 2012", a center coordinate of a map tile image of the time is "37.256566" and "127.054095", a zoom level is "15.0", a center address is "Maetan 3-dong, Suwon city", and a display mode is "hybrid".

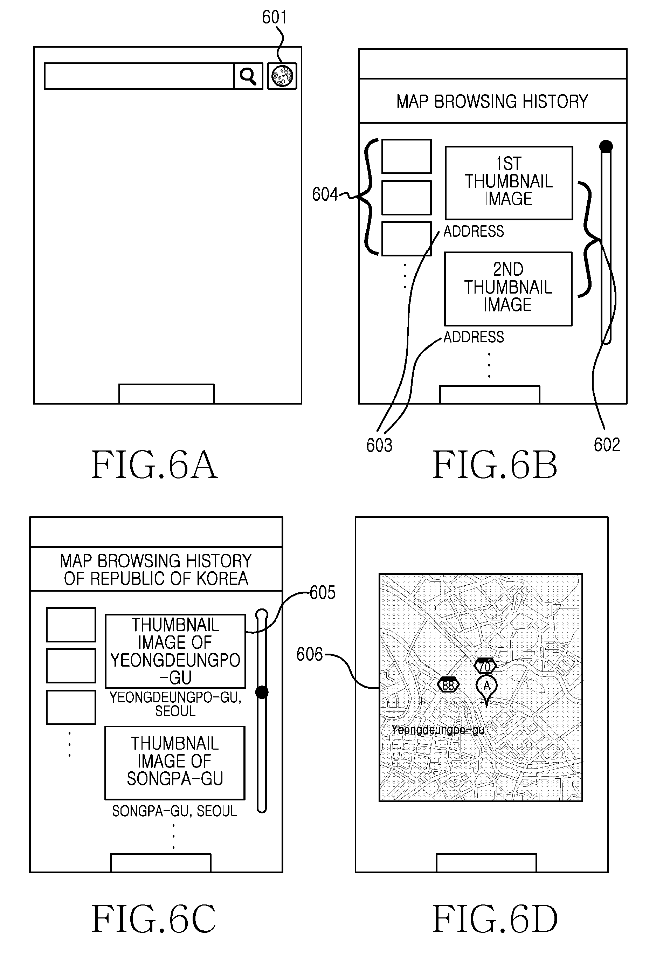

FIGS. 6A to 6D are diagrams illustrating calling a map browsing history and displaying a map image of a specific area according to an exemplary embodiment of the present invention.

FIG. 6A is a diagram illustrating calling a map browsing history according to an exemplary embodiment of the present invention. As illustrated in FIG. 6A, if a user executes a map search application stored in an electronic device, an icon 601 calling the map browsing history can be displayed on the electronic device. In more detail, the electronic device according to an exemplary embodiment of the present invention includes the icon 601 capable of directly calling the map browsing history in the map search application, such that the user can easily call a previously searched browsing history during a map search. For example, when the user desires to return to a previously browsed specific place after browsing and searching an unfamiliar area, he/she can easily return to the previously browsed specific place through the map browsing history, without a need to search peripheral areas one by one. That is, as in the aforementioned example, an exemplary embodiment of the present invention provides an advantage in that the map browsing history is convenient because much interaction is not involved for the user to return to the previously browsed place after browsing the unfamiliar area and its peripheral areas.

FIG. 6B is a diagram illustrating constituent elements displayed in a map browsing history according to an exemplary embodiment of the present invention. As illustrated in FIG. 6B, the map browsing history according to an exemplary embodiment of the present invention can include one or more thumbnail images 602, an address 603 of each thumbnail image 602, and one or more country icons 604 for sorting and storing the one or more thumbnail images 602 by country. As illustrated in FIG. 6A, when the user is searching an electronic map, if the user selects a map browsing icon so as to return to a previously browsed map image, the map browsing history of FIG. 6B is displayed on the electronic device. After that, the user selects the corresponding country icon 604 in order to select a country in which a desired map image to be dragged is located. That is, if the electronic device receives a selection of a specific country icon from the user, the electronic device displays at least one thumbnail image stored in the selected country icon, on the electronic device.

For instance, assume that the user previously searches a place 'A' of the United Kingdom through a map search application, and then returns to a map image including the place 'A'. If the user is unfamiliar with the place 'A', significant effort and time may be involved for the user to again execute the map search application and return to the map image including the place 'A'. In contrast, because the electronic device according to an exemplary embodiment of the present invention automatically stores the map image including the place 'A' which the user had searched previously, the user can easily return to the map image including the place 'A' by using the map browsing history. That is, as in the example illustrated in FIG. 6B, the user can easily find and display the map image including the place 'A' on the electronic device, upon seeing the one or more thumbnail images 602 and the addresses 603 of the thumbnail images 602.

FIG. 6C is a diagram illustrating selecting a thumbnail image according to an exemplary embodiment of the present invention. As illustrated in FIG. 6C, if the user selects a specific country icon in the displayed map browsing history, a stored map image of a corresponding country is displayed as a thumbnail image. That is, at least one thumbnail image including an area of a corresponding country has been stored in a country icon. For example, assume that the user previously searches 'Yeongdeungpo-gu, Seoul, Korea' through a map search application and then again returns to a map image including 'Yeongdeungpo-gu, Seoul, Korea'. If the user is unfamiliar with 'Yeongdeungpo-gu, Seoul, Korea', significant interaction may be involved for the user to again execute the map search application and return to the map image including 'Yeongdeungpo-gu, Seoul, Korea'. In contrast, because the electronic device of an exemplary embodiment of the present invention automatically stores the map image including 'Yeongdeungpo-gu, Seoul, Korea' which the user had searched previously, the user can again easily return to the map image including 'Yeongdeungpo-gu, Seoul, Korea' by using the map browsing history. That is, as in an example illustrated in FIG. 6C, the user can easily find and select a thumbnail image 605 including 'Yeongdeungpo-gu, Seoul, Korea', upon seeing at least one or more thumbnail images and addresses of the thumbnail images.

FIG. 6D is a diagram illustrating displaying a map image by using a map browsing history according to an exemplary embodiment of the present invention. First, when the user is searching an electronic map, if the user selects a map browsing icon displayed on the electronic device so as to return to a previously browsed map image, the map browsing history is displayed on the electronic device. After that, the user selects a country icon in order to select a corresponding country in which a desired map image to be dragged is located. That is, if the electronic device receives a selection of a specific country icon from the user, the electronic device displays one or more thumbnail images stored in the selected country icon. After that, the user selects a thumbnail image including a desired place to be moved with reference to the at least one or more thumbnail images and the addresses of the corresponding thumbnail images displayed on the electronic device. If a specific thumbnail image is selected by the user, the electronic device zooms in the selected thumbnail image and displays a map image corresponding to the selected thumbnail image. For example, as illustrated in FIG. 6D, the electronic device receives a selection of a thumbnail image of 'Yeongdeungpo-gu' from the user, and displays a map image including 'Yeongdeungpo-gu' on the touch screen.

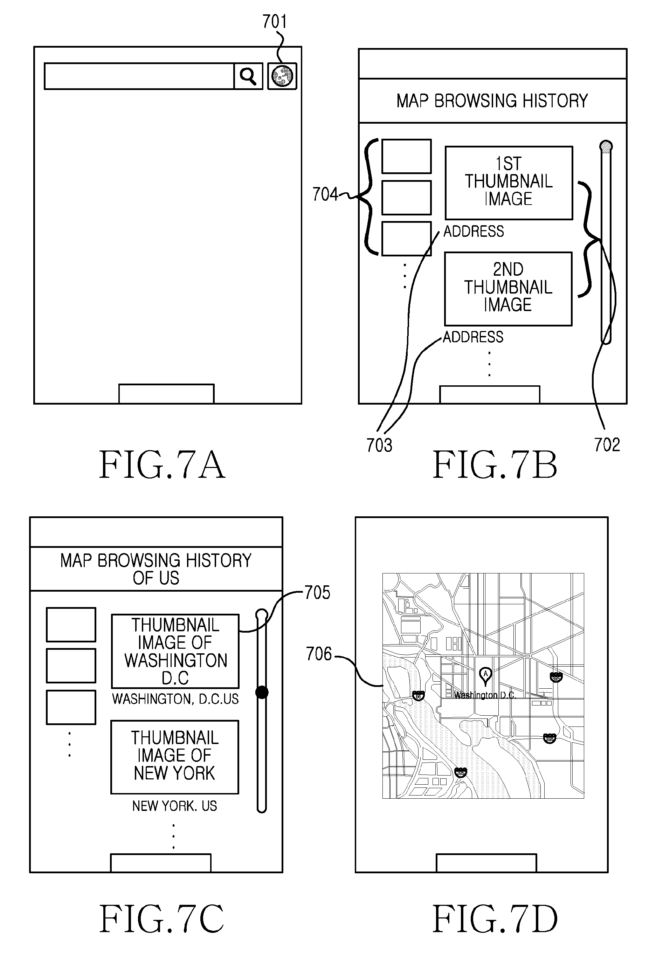

FIGS. 7A to 7D are diagrams illustrating calling a map browsing history and displaying a map image of a specific area according to an exemplary embodiment of the present invention.

FIG. 7A is a diagram illustrating calling a map browsing history according to an exemplary embodiment of the present invention. As illustrated in FIG. 7A, if a user executes a map search application stored in an electronic device, an icon 701 calling the map browsing history can be displayed on the electronic device. In more detail, the electronic device according to an exemplary embodiment of the present invention includes the icon 701 for of directly calling the map browsing history in the map search application, such that the user can easily call a previously searched browsing history during a map search. For example, when the user desires to return to a previously browsed specific place after browsing and searching an unfamiliar area, he/she can easily return to the previously browsed specific place through the map browsing history, without requiring searching of peripheral areas one by one. That is, as in the aforementioned example, an exemplary embodiment of the present invention provides an advantage in that the map browsing history of an exemplary embodiment of the present invention is convenient because much interaction is not involved for the user to return to the previously browsed place after browsing the unfamiliar area and its peripheral areas.

Particularly, a language of the map search application is generally provided as a language of a corresponding country and English. In more detail, a map search application used in a specific country is generally expressed in the language of the specific country and in English. That is, to search a map of a third country, that is, a country that is other than the user's native country and that does not speak English, by using the map search application, the user should be good at a language of the third country, so that the user can search areas of interest and peripheral areas in the third country. For example, if a person who is fluent in a particular native language and English searches a specific geographical name of the third country by using the map search application, all geographical names displayed on the touch screen of the electronic device are expressed in the language of the third country. Accordingly, significant interaction may be involved for the user unfamiliar with the language of the third county to return to a previously searched map tile image. In addition, although the map search application is expressed in English, because a user not using English as a native language or not fluent in English is unfamiliar with English, there was the problem of the aforementioned example. In contrast, because the electronic device of an exemplary embodiment of the present invention provides a map browsing history to the user, the user can easily call a map image that he/she wants, although he/she is unfamiliar with a language other than his/her native language.

FIG. 7B is a diagram illustrating constituent elements displayed in a map browsing history according to an exemplary embodiment of the present invention. As illustrated in FIG. 7B, the map browsing history according to an exemplary embodiment of the present invention can include one or more thumbnail images 702, an address 703 of each thumbnail image, and one or more country icons 704 for sorting and storing the one or more thumbnail images 702 by country. As illustrated in FIG. 7A, when the user is searching an electronic map, if the user selects a map browsing icon so as to return to a previously browsed map image, the map browsing history of FIG. 7B is displayed on the electronic device. After that, the user selects the corresponding country icon 704 in order to select a country in which a desired map image to be dragged is located. That is, if the electronic device receives a selection of a specific country icon from the user, the electronic device displays at least one thumbnail image stored in the selected country icon, on the electronic device.

For instance, assume that the user has previously searched a place 'A' of United States (US) through a map search application and then returns to a map image including the place 'A'. If the user is unfamiliar with the place 'A', significant effort and time may be involved for the user to again execute the map search application and return to the map image including the place 'A'. In contrast, because the electronic device according to an exemplary embodiment of the present invention automatically stores the map image including the place 'A' which the user had searched before, the user can again easily return to the map image including the place 'A' by using the map browsing history. That is, as in the example illustrated in FIG. 7B, the user can easily find and display the map image including the place 'A' on the electronic device, upon seeing the one or more thumbnail images 702 and the addresses 703 of the thumbnail images 702.

FIG. 7C is a diagram illustrating selecting a thumbnail image according to an exemplary embodiment of the present invention. As illustrated in FIG. 7C, if the user selects a specific country icon in the displayed map browsing history, a stored map image of a corresponding country is displayed as a thumbnail image. That is, at least one thumbnail image including an area of a corresponding country has been stored in a country icon. For example, assume that the user has previously searched 'Washington D.C., US' through a map search application and then returns to a map image including 'Washington D.C., US'. If the user is unfamiliar with English, the user may be required to execute a map search application to browse all areas of US displayed in the electronic map and return to a map image including 'Washington D.C., US' that the user had searched previously. In contrast, because the electronic device of an exemplary embodiment of the present invention automatically stores the map image including 'Washington D.C., US' which the user had searched previously, the user can easily return to the map image including 'Washington D.C., US' by using the map browsing history. That is, as in an example illustrated in FIG. 7C, the user can easily find and select a thumbnail image 705 including 'Washington D.C., US', upon seeing one or more thumbnail images and addresses of the thumbnail images.

FIG. 7D is a diagram illustrating displaying a map image by using a map browsing history according to an exemplary embodiment of the present invention. First, when the user is searching an electronic map, if the user selects a map browsing icon displayed on the electronic device so as to return to a previously browsed map image, the map browsing history is displayed on the electronic device. After that, the user selects a country icon in order to select a corresponding country in which a desired map image to be dragged is located. That is, if the electronic device receives a selection of a specific country icon from the user, the electronic device displays one or more thumbnail images stored in the selected country icon. After that, the user selects a thumbnail image including a desired place to be moved with reference to the one or more thumbnail images and the addresses of the corresponding thumbnail images displayed on the electronic device. If a specific thumbnail image is selected by the user, the electronic device zooms in the selected thumbnail image and displays a map image corresponding to the selected thumbnail image. For example, as illustrated in FIG. 7D, the electronic device receives a selection of a thumbnail image of 'Washington D.C.' from the user, and displays a map image 706 including 'Washington D.C.'.

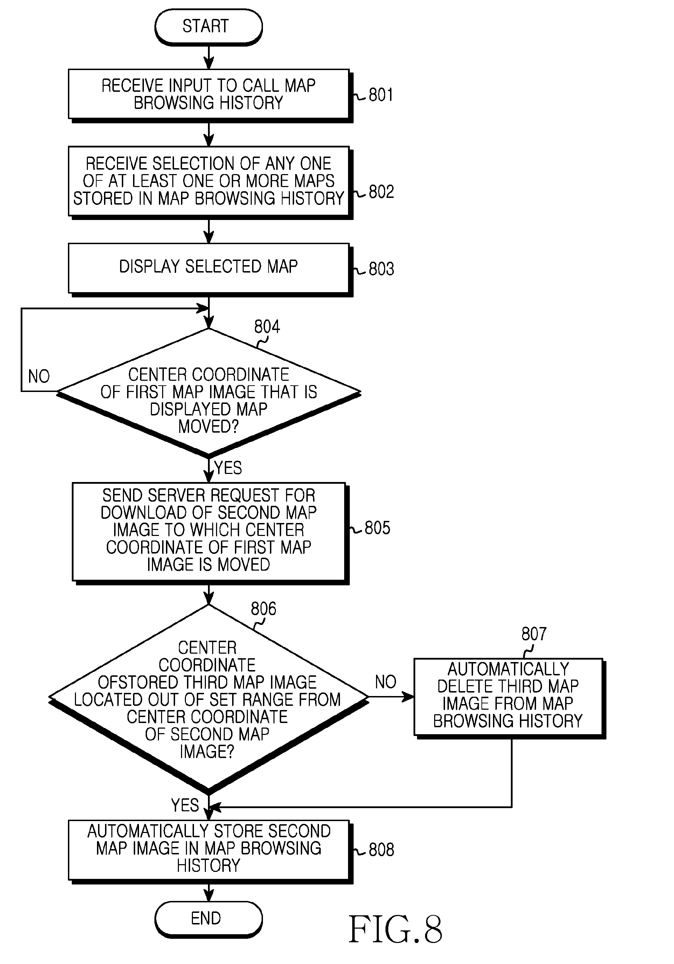

FIG. 8 is a flowchart illustrating a procedure of calling a map image and newly storing and deleting a map browsing history, according to an exemplary embodiment of the present invention. As illustrated in FIG. 8, first, an electronic device receives an input to call a map browsing history from a user. If the user executes a map search application stored in the electronic device, an icon calling the map browsing history can be displayed on the electronic device. In more detail, the electronic device according to an exemplary embodiment of the present invention includes the icon capable of directly calling the map browsing history in the map search application, such that the user can easily call a previously searched browsing history during map search. For example, when the user desires to return to a previously browsed specific place after browsing and searching an unfamiliar area, he/she can easily return to the previously browsed specific place through the map browsing history without a need for searching peripheral areas one by one. That is, as in the aforementioned example, an exemplary embodiment of the present invention provides an advantage in that the map browsing history of an exemplary embodiment of the present invention is convenient because significant interaction is not involved for the user to return to the previously browsed place after browsing the unfamiliar area and its peripheral areas. Accordingly, in step 801, the electronic device receives an input of the icon calling the map browsing history displayed on the electronic device, from the user.

After receiving the input to call the map browsing history, in step 802, the electronic device then receives a selection of one of one or more maps stored in the map browsing history. When the user is searching an electronic map, if the user selects a map browsing icon displayed on the touch screen so as to return to a previously browsed map image, the map browsing history is displayed on the electronic device. After that, the user selects the corresponding country icon in order to select a country in which a desired map image to be dragged is located. That is, if the electronic device receives a selection of a specific country icon from the user, the electronic device displays at least one thumbnail image stored in the selected country icon, on the electronic device.

After receiving the selection of one of the one or more maps stored in the map browsing history, in step 803, the electronic device displays the selected map. That is, the user selects a thumbnail image including a desired place to be moved with reference to the one or more thumbnail images and the addresses of the corresponding thumbnail images displayed on the electronic device. If a specific thumbnail image is selected by the user, the electronic device zooms in the selected thumbnail image and displays a map image corresponding to the selected thumbnail image.

Next, in step 804, the electronic device determines if a center coordinate of a first map image that is the displayed map has been moved. In more detail, to automatically store a newly dragged map image, the electronic device determines if the center coordinate of the first map image has been moved. That is, in the related art, there was a disadvantage in that, if there are a place, a noted place, and the like, that the user desires to memorize when he/she is browsing the electronic map, the user must manually store the newly dragged map image displaying the place, the noted place, and the like, one by one. In contrast, to automatically store the newly dragged map image, the electronic device of an exemplary embodiment of the present invention determines if the center coordinate of the first map image that the user had browsed previous to the dragging of the newly dragged map image has been moved.

If it is determined in step 804 that the center coordinate of the first map image that is the displayed map has been moved, in step 805, the electronic device sends a server a request for download of a second map image to which the center coordinate of the first map image has been moved. In more detail, the electronic device sends the server a request for download of map tile images 220 of an area of interest inputted from the user and displays the corresponding map tile images 220 on the electronic device. That is, if an electronic map of a specific area for which the electronic device has sent the server a request is not completely downloaded, the user cannot browse the electronic map of the specific area, and the electronic device cannot automatically store the electronic map of the specific area.

Next, in step 806, the electronic device determines whether a center coordinate of a stored third map image is located outside of a predetermined range from the center coordinate of the second map image. In more detail, the electronic device sends the server a request for download of a newly dragged map image and, if it is determined that the newly dragged map image has been completely downloaded, the electronic device determines whether a center coordinate of stored at least one map image is located outside of a predetermined range from a center coordinate of the newly dragged map image. Here, the second map image can denote the newly dragged map image, and the third map image can denote the stored at least one map image. That is, the electronic device sends the server a request for download of the second map image and, if it is determined that the second map image has been completely downloaded, the electronic device determines whether the center coordinate of the stored at least one third map image is located outside of a predetermined range from a center coordinate of the second map image.

If it is determined in step 806 that the center coordinate of the stored third map image is located within the predetermined range from the center coordinate of the second map image, in step 807, the electronic device automatically deletes the stored third map image from the map browsing history. In more detail, to automatically store the newly dragged second map image, the electronic device determines whether the center coordinate of the stored third map image is located outside of the predetermined range from the center coordinate of the newly dragged second map image. This is because there is no need to store the map image in duplicate within the predetermined range. That is, the electronic device of an exemplary embodiment of the present invention provides an advantage of, when a center coordinate of a newly browsed map image and a center coordinate of a previously browsed stored map image are duplicated within the predetermined range, deleting the previously browsed stored map image, thereby achieving efficient management of a memory of the electronic device.

After that, if it is determined in step 806 that the center coordinate of the stored third map image is located out of the predetermined range from the center coordinate of the second map image, or after the electronic device automatically deletes the third map image from the map browsing history in step 807, the electronic device proceeds to step 808 and automatically stores the second map image in the map browsing history. In more detail, although the center coordinate of the third map image is located within the predetermined range from the center coordinate of the second map image, the second third map image, which is a result of dragging the original first map image, is always stored. Here, the electronic device includes and stores at least one of a date of browsing the second map image, a time, a zoom level, a center coordinate, a center address, and a display mode in the map browsing history. However, the electronic device keeps, not deleting, at least one third map located outside of the predetermined range from the center coordinate of the second map image.

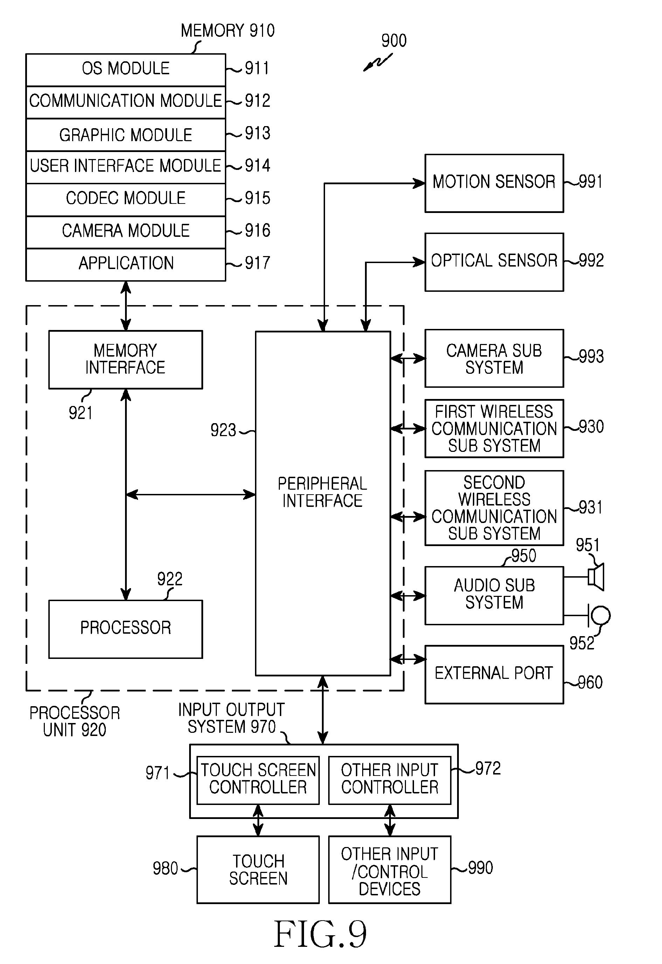

FIG. 9 is a block diagram illustrating a construction of an electronic device according to an exemplary embodiment of the present invention.

This electronic device 900 can be a portable electronic device, and can be a device such as a portable terminal, a mobile phone, a mobile pad, a media player, a tablet computer, a handheld computer, or a Personal Digital Assistant (PDA). Also, the electronic device may be any portable electronic device including a device having a combination of two or more functions among these devices.

The electronic device 900 includes a memory 910, a processor unit 920, a first wireless communication sub system 930, a second wireless communication sub system 931, an audio sub system 950, a speaker 951, a microphone 952, an external port 960, an Input Output (IO) sub system 970, a touch screen 980, and other input or control devices 990. The memory 910 and the external port 960 can be used in plural.

The processor unit 920 can include a memory interface 921, one or more processors 922, and a peripheral interface 923. According to some cases, the whole processor unit 920 is also called a processor. In an exemplary embodiment of the present invention, the processor unit 920 determines if a center coordinate of a first map image that is a displayed map has been moved and, if it is determined that second map tile images 220 have been completely downloaded, the processor unit 920 determines if a center coordinate of stored at least one third map image is located outside of a predetermined range from a center coordinate of the second map image. Also, the processor unit 910 automatically deletes the stored at least one third map image.

The processor 922 executes various software programs and performs various functions for the electronic device 900, and also performs processing and control for voice communication and data communication. Also, in addition to this general function, the processor 922 executes a specific software module (i.e., an instruction set) stored in the memory 910 and plays a role of performing specific various functions corresponding to the software module. That is, the processor 922 interworks with the software modules stored in the memory 910 to carry out a method of an exemplary embodiment of the present invention.

The processor 922 can include one or more data processors, image processors, or COder/DECoders (CODECs). The data processor, the image processor, or the CODEC may be constructed separately. Also, the processor 922 may be constructed as several processors performing different functions. The peripheral interface 923 connects the IO sub system 970 of the electronic device 900 and various peripheral devices thereof to the processor 922 and to the memory 910 through the memory interface 921.

Various constituent elements of the electronic device 900 can be coupled with one another by one or more communication buses (not denoted by reference numerals) or stream lines (not denoted by reference numerals).

The external port 960 is used for directly connecting the electronic device 900 to other electronic devices, or indirectly connecting the electronic device 900 to other electronic devices through a network (for example, the Internet, an intranet, a Wireless Local Area Network (WLAN), and the like). For example, the external port 960 refers to, although not limited to, a Universal Serial Bus (USB) port, a FIREWIRE port, or the like.

A motion sensor 991 and an optical sensor 992 are coupled to the peripheral interface 923 and enable various functions. For instance, the motion sensor 991 and the optical sensor 992 can be coupled to the peripheral interface 923, and sense a motion of the electronic device 900 and sense a light from the exterior, respectively. In addition to this, other sensors such as a global positioning system, a temperature sensor, a biological sensor or the like can be connected to the peripheral interface 923 and perform related functions.

A camera sub system 993 can perform a camera function such as photograph and video clip recording.

The optical sensor 992 can use a Charged Coupled Device (CCD) device or Complementary Metal-Oxide Semiconductor (CMOS) device.

The first and second wireless communication sub systems 930 and 931 enable a communication function. The first and second wireless communication sub systems 930 and 931 can include a radio frequency receiver and transceiver and/or an optical (e.g., infrared) receiver and transceiver. The first and second communication sub systems 930 and 931 can be distinguished according to a communication network in which the electronic device 900 communicates. For example, the communication network can include a communication sub system designed to operate through, although not limited to, a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a WiFi network, a Wireless interoperability for Microwave Access (WiMAX) network, a Bluetooth network or/and the like. However, because an exemplary embodiment of the present invention uses WiFi communication through a WiFi network, the first wireless communication sub system 930 and the second wireless communication sub system 931 are combined and constructed as one wireless communication sub system.

The audio sub system 950 is coupled to the speaker 951 and the microphone 952, and can take charge of input and output of an audio stream such as voice recognition, voice copy, digital recording, and call function. That is, the audio sub system 950 communicates with a user through the speaker 951 and the microphone 952. The audio sub system 950 receives a data stream through the peripheral interface 923 of the processor unit 920, converts the received data stream into an electric stream, and forwards the converted electric stream to the speaker 951. The speaker 951 converts the electric stream into a sound wave audible by a person and outputs the converted sound wave. The microphone 952 converts a sound wave forwarded from the person or other sound sources into an electric stream. The audio sub system 950 receives a converted electric stream from the microphone 952. The audio sub system 950 converts the received electric stream into an audio data stream, and transmits the converted audio data stream to the peripheral interface 923. The audio sub system 950 can include a detachable earphone, headphone or headset.

The IO sub system 970 includes a touch screen controller 971 and/or other input controller 972. The touch screen controller 971 can be coupled to the touch screen 980. The touch screen 980 and the touch screen controller 971 can detect a contact and a motion or an interruption thereof by using, although not limited to, not only capacitive, resistive, infrared and surface acoustic wave technologies for determining one or more contact points with the touch screen 980 but also any multi-touch sensing technology including other proximity sensor arrays or other elements. The other input controller 972 can be coupled to the other input/control devices 990. The other input/control devices 990 can be at least one or more buttons, a rocker switch, a thumb-wheel, a dial, a stick, a pointer device such as a stylus and/or the like.

The touch screen 980 provides an input output interface between the electronic device 900 and a user. That is, the touch screen 980 forwards a user touch input to the electronic device 900. Also, the touch screen 980 is a medium for showing an output of the electronic device 900 to the user. That is, the touch screen 980 provides a visual output to the user. This visual output can be presented in a form of a text, a graphic, a video, and a combination thereof.

The touch screen 980 can use various displays. For example, the touch screen 980 can use, although not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), or a Flexible LED (FLED). In the present invention, the touch screen 980 receives an input to call a stored map browsing history, receives a selection of any one of at least one or more maps stored in the map browsing history, and displays the selected map. Also, the touch screen 980 displays at least one or more country icons sorting and storing at least one or more maps by country, receives a selection of any one of the displayed at least one or more country icons, displays at least one or more maps stored in the selected country icon as thumbnail images, and receives a selection of any one of the at least one or more maps displayed as the thumbnail images. Also, the touch screen 980 displays including each address in the displayed at least one thumbnail image, and displays according to browsing date, time, zoom level, center coordinate, center address, and display mode, and displays the selected map by map tile images.

The memory 910 can be coupled to the memory interface 921. The memory 910 can include one or more high-speed random access memories and/or nonvolatile memories such as magnetic disk storage devices, one or more optical storage devices and/or flash memories (for example, Not AND (NAND) memories, Not OR (NOR) memories).

The memory 910 stores software. The software includes an Operating System (OS) module 911, a communication module 912, a graphic module 913, a user interface module 914, a Motion Pictures Experts Group (MPEG) module 915, a camera module 916, one or more application modules 917 and the like. Also, because the modules, which are constituent elements of the software, can be expressed as a set of instructions, the module is also called an instruction set. The module is also called a program. In the present invention, the memory 910 automatically stores a second map image. Also, the memory 910 includes and stores at least one of a date browsing the second map image, a time, a zoom level, a center coordinate, a center address, and a display mode, in a map browsing history.

The OS software 911 represents a built-in operating system such as WINDOWS, LINUX, Darwin, RTXC, UNIX, OS X, or VxWorks, and includes various software constituent elements controlling general system operation. Control of the general system operation includes memory management and control, storage hardware (device) control and management, power control and management and the like. Further, the OS software 911 performs even a function of making smooth communication between various hardware (devices) and software constituent elements (modules).

The communication module 912 can enable communication with other electronic device such as a personal computer, a server, a portable terminal and/or the like, through the first and second wireless communication sub systems 930 and 931 or the external port 960. In the present invention, if it is determined that a center coordinate of a first map image has been moved, the communication module 912 sends a server a request for download of a second map image that is a result of moving the center coordinate of the first map image.

The graphic module 913 includes various software constituent elements for providing and displaying a graphic on the touch screen 980. The term 'graphic' is used as meaning including a text, a web page, an icon, a digital image, a video, an animation and the like. In the present invention, the touch screen 980 displays a message about setting or non-setting of a smart rotation function, and receives a selection of any region of the message from a user.

The user interface module 914 includes various software constituent elements associated with a user interface. Further, the user interface module 914 includes information about how a state of the user interface is changed and in which conditions the change of the state of the user interface is carried out, and the like.

The CODEC module 915 can include a software constituent element related to encoding and decoding of a video file. The CODEC module 915 can include a video stream module such as an MPEG module and/or H204 module. Also, the CODEC module can include several audio file CODEC modules such as AAA, Adaptive Multi-Rate (AMR), Windows Media Audio (WMA) and the like. Also, the CODEC module 915 includes an instruction set corresponding to an implementation method of the present invention.

The camera module 916 includes a camera related software constituent element enabling camera-related processes and functions.

The application module 917 includes a browser, an electronic mail (e-mail), an instant message, word processing, keyboard emulation, an address book, a touch list, a widget, Digital Right Management (DRM), voice recognition, voice copy, a location determining function, a location-based service and the like.

Also, various functions of the electronic device 900 according to the present invention mentioned above and to be mentioned below can be executed by hardware including one or more stream processing and/or Application Specific Integrated Circuits (ASICs), and/or software, and/or a combination of them.

Certain aspects of the present invention can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), Compact Disc ROMs (CD-ROMs), magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

According to an electronic device for searching a map by using a map browsing history of the exemplary embodiments of the present invention and a method thereof, there is an effect of, by automatically storing an area that a user had browsed previously, allowing a user to easily return to the previously browsed area.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An operation method of an electronic device, the method comprising:
calling a stored map browsing history;
receiving a selection of one of one or more maps stored in the map browsing history; and
displaying the selected map.

2. The method of claim 1, wherein the receiving of the selection of the one of the one or more maps stored in the map browsing history comprises:
displaying one or more country icons sorting and storing the one or more maps by country;
receiving a selection of one of the displayed one or more country icons;
displaying the one or more maps stored in the selected country icon, as thumbnail images; and
receiving a selection of one of the one or more maps displayed as the thumbnail images.

3. The method of claim 2, wherein the displayed one or more thumbnail images are expressed in at least one language among a predetermined language, a language used in a country corresponding to the selected country icon, and English.

4. The method of claim 2, wherein the displaying of the one or more maps stored in the selected country icon as the thumbnail images comprises displaying at least one of a browsing date, time, zoom level, center coordinate, center address, and display mode.

5. The method of claim 1, wherein the displaying of the selected map displays the selected map as a map image.

6. The method of claim 1, further comprising determining if a center coordinate of a first map that is the displayed map has been moved.

7. The method of claim 6, further comprising, if it is determined that the center coordinate of the first map has been moved:
sending a server a request for download of map tile images of a second map that is a result of moving the center coordinate of the first map; and
if it is determined that the second map tile images have been completely downloaded, determining whether a center coordinate of stored at least one third map is located out of a predetermined range from the center coordinate of the second map.

8. The method of claim 7, further comprising, if it is determined that the center coordinate of the stored at least one third map is located out of the predetermined range from the center coordinate of the second map, automatically storing a second map image in the map browsing history.

9. The method of claim 7, further comprising, if it is determined that the center coordinate of the stored at least one third map is located within the predetermined range from the center coordinate of the second map:
automatically deleting at least one stored third map image from the map browsing history; and
automatically storing the second map image in the map browsing history.

10. The method of claim 9, wherein the automatic storing of the second map image in the map browsing history comprises storing at least one of a date browsing the second map image, a time, a zoom level, a center level, a center address, and a display mode in the map browsing history.

11. A non-transitory computer-readable storage medium storing instructions that, when executed, cause at least one processor to perform the method of claim 1.

12. An electronic device comprising a touchscreen arranged to show output to a user and to transfer a touchscreen from the user and a processor unit arranged to control the touchscreen, wherein the processor is further arranged to operate the method of any one of claims 1 to 11.

13. A computer program product comprising computer program code means adapted to perform all the steps of any one of the method claims 1 to 11 when the computer program is run on a computer.
